(19) Europäisches Patentamt / European Patent Office / Office européen des brevets

(11) **EP 1 363 762 B1**

(12) **EUROPÄISCHE PATENTSCHRIFT**

(45) Veröffentlichungstag und Bekanntmachung des Hinweises auf die Patenterteilung:
**25.05.2011  Patentblatt 2011/21**

(21) Anmeldenummer: **02719885.2**

(22) Anmeldetag: **21.02.2002**

(51) Int Cl.:
**B29C 47/90** $^{(2006.01)}$

(86) Internationale Anmeldenummer:
**PCT/EP2002/001818**

(87) Internationale Veröffentlichungsnummer:
**WO 2002/070228 (12.09.2002 Gazette 2002/37)**

(54) **VAKUUM-KALIBRIERVORRICHTUNG MIT FLÜSSIGER SPERRE IN DER ABFÜHRLEITUNG DER KÜHLFLÜSSIGKEIT**

COOLED CALIBRATING DEVICE FOR A PLASTIC EXTRUSION FACILITY

DISPOSITIF DE CALIBRAGE A REFROIDISSEMENT POUR INSTALLATION D'EXTRUSION DE MATIERE PLASTIQUE

(84) Benannte Vertragsstaaten:
**AT BE CH CY DE DK ES FI FR GB GR IE IT LI LU MC NL PT SE TR**

(30) Priorität: **01.03.2001  DE 10109958**

(43) Veröffentlichungstag der Anmeldung:
**26.11.2003  Patentblatt 2003/48**

(73) Patentinhaber: **Veka AG
48324 Sendenhorst (DE)**

(72) Erfinder: **KLEIN, Helmut
59320 Ennigerloh (DE)**

(74) Vertreter: **Tarvenkorn, Oliver et al
Patentanwaltskanzlei Tarvenkorn
Hafenweg 14
48155 Münster (DE)**

(56) Entgegenhaltungen:
**DE-C- 19 622 419      DE-C- 19 707 712
DE-U- 7 620 107        GB-A- 269 226
US-A- 1 423 242        US-A- 1 595 238
US-A- 1 595 481        US-A- 3 558 753
US-A- 3 853 448        US-A- 3 904 334
US-A- 5 464 335**

- **PATENT ABSTRACTS OF JAPAN vol. 010, no. 191 (M-495), 4. Juli 1986 (1986-07-04) & JP 61 035928 A (MITSUBISHI KASEI VINYL CO), 20. Februar 1986 (1986-02-20)**
- **J. ZIEREP: "Grundzüge der Strömungslehre" 1987 , G. BRAUN , KARLSRUHE XP002207163 Seite 33 -Seite 34**
- **H. J. SCHLICHTING: "Spiel mit den Elementen - Wasser und Luft in Freihandexperimenten" PRAXIS DER NATURWISSENSCHAFTEN - PHYSIK, Bd. 41, Nr. 2, 1992, Seiten 1-7, XP002207162**

EP 1 363 762 B1

**Beschreibung**

Die Erfindung betrifft eine Kalibriervorrichtung für eine Kunststoffextrusionsanlage, mit einem eine Kühlflüssigkeit aufnehmenden Gehäuse, durch das ein Kunststoffprofil gefördert und dabei von der Kühlflüssigkeit gekühlt wird, Kalibrierführungen, durch die das Kunststoffprofil hindurchläuft, Zu- und Abführöffnungen mit angeschlossenen Leitungen für die Kühlflüssigkeit, wobei das Niveau der Kühlflüssigkeit oberhalb des Scheitels des zu kalibrierenden Kunststoffprofils liegt und so eingestellt ist, daß ein flüssigkeitsfreier, luftgefüllter Bereich oberhalb des Niveaus der Kühlflüssigkeit verbleibt, einer oberhalb des Niveaus angeordneter Luftabsaugöffnung, durch die Luft absaugbar ist und ein Unterdruck

$$Pu = Pa - \Delta P$$

im flüssigkeitsfreien, luftgefüllten Bereich oberhalb des Niveaus der Kühlflüssigkeit gegenüber dem Außenatmosphärendruck herstellbar ist, wobei Pu der in der Kalibriervorrichtung herrschende Unterdruck, Pa der außerhalb der Kalibriervorrichtung herrschende Atmosphärendruck und $\Delta P$ der Unterschied zwischen beiden Druckwerten, jeweils gemessen in Längeneinheiten einer Kühlflüssigkeitsäule, ist.

Das Kalibrieren von Kunststoffhohlprofilen, die aus einem Extruder herausgepresst werden, wird in gekühlten Bädern durchgeführt. Für die Kalibrierung der Kunststoffhohlprofile ist ein Unterdruck erforderlich. Bei sogenannten Vollbädern wird das Profil durch ein in einem Gehäuse befindliches Vollbad der Kühlflüssigkeit - zumeist Trinkwasser - hindurchgefördert. Das Umwälzen der Kühlflüssigkeit erfordert eine relativ hohe Pumpleistung, da bei den meisten Kalibriervorrichtungen Luft und Wasser zugleich gefördert werden.

Bekannt ist aus der DE 196 22 419 ein Verfahren und eine Kalibriervorrichtung, bei dem die Konvektionsströmung möglichst laminar gehalten wird, wobei die kritische Reynolds-Zahl nicht überschritten werden soll.

Eine weitere Vorrichtung entsprechend des Oberbegriffes des Anspruchs 1' ist in der DE19707712 offenbart. Eine Lösung zur Aufrechterhaltung eines Vakumms bei einer Kühl- und Kalibrierstrecke ist in der JP61035928 offenbart. Das Prinzip einer flüssigen Sperre zur Aufrechterhaltung eines Vakumms bei einer Kühl- und Kalibrierstrecke ist in der US3558753 offenbart.

Zum einen ist es schwer einhaltbar, bei einem hindurchlaufenden Profil und ständigem Zu- und Abfluß der Kühlflüssigkeit eine turbulente Strömung zu vermeiden. Zum anderen ist ein Trennen von Wasser und Luft nicht immer leicht möglich.

Es stellt sich daher die Aufgabe, in einer Kalibriervorrichtung für eine Kunststoffextrusionsanlage den Energieverbrauch dadurch zu senken, daß die Pumpleistung erniedrigt wird, ohne daß komplizierte Steuerungen zur Vermeidung von turbulenten Strömungen eingesetzt werden müssen.

Diese Aufgabe wird erfüllt bei einer Kalibriervorrichtung der eingangs genannten Art, bei der die Abführöffnung für die Kühlflüssigkeit auf der Höhe des Niveaus der Kühlflüssigkeit in einer Wand des Gehäuses der Kalibriervorrichtung

angeordnet ist, so daß die Kühlflüssigkeit ohne zusätzliche Pumpe ablaufen kann, und daß eine sich an die Abführöffnung anschließende Abführleitung im wesentlichen vertikal verläuft und unterhalb eines Niveaus entsprechend $\Delta P$ in einem der Außenatmosphäre ausgesetzten Kühlflüssigkeitsvorrat endet, wobei sich in der Abführleitung eine kompakte Flüssigkeitssäule mit einer Höhe h entsprechend $\Delta P$ ausbildet.

Wie an sich bekannt, kann die ablaufende Flüssigkeit aufgefangen werden oder ablaufen in ein Becken, aus dem sie erneut entnommen wird und über einen gekühlten Kreislauf wieder dem Gehäuse der Kalibriervorrichtung zugeführt wird.

Die neue Vorrichtung macht von dem Prinzip eines Siphons bzw. eines Barometers Gebrauch. Da in dem Bereich oberhalb des Niveaus der Kühlflüssigkeit ein Unterdruck gegenüber dem Außendruck herrscht, bildet die Flüssigkeitssäule innerhalb der Abführleitung sowohl eine Sperre als auch ein Aufnahmereservoir, das durch die nachlaufende Kühlflüssigkeit immer wieder ergänzt wird. Die Kühlflüssigkeit läuft in einen Bereich unterhalb des Niveaus des Kühlflüssigkeitsvorrates außerhalb der Kalibriervorrichtung aus. Dabei wird ausgenutzt, daß der Unterdruck im Gehäuse begrenzt ist und auf einem bestimmten maximalen Niveau gehalten wird.

Die Abführleitung kann beispielsweise in einem S-förmig gekrümmten Siphon enden, der an seinem oberen Scheitelbogen eine Ventilationsöffnung aufweist.

Die Abführleitung endet in einem offenen Becken oder in einer offenen Rinne, wobei die Öffnung der Abführleitung unterhalb des Kühlflüssigkeitsspiegels des Beckens oder der Rinne angeordnet ist. Vorteilhaft ist weiterhin, daß die Abführleitung mit ihrer Flüssigkeitssäule ein Maßstab ist für den Unterdruck, der oberhalb des Kühlflüssigkeitsniveaus herrscht. Man kann demnach auch auf ein Manometer verzichten, wenn die Abführleitung mit einem über die Flüssigkeitssäule reichenden Schauglas versehen ist.

Schließlich kann, wie bereits angedeutet, der der Außenatmosphäre ausgesetzte Kühlflüssigkeitsvorrat über einen geschlossenen Kreislauf über einen Wärmetauscher und eine Pumpstrecke geführt werden, die unterhalb des Niveaus der Kühlflüssigkeit in einer Öffnung im Gehäuse der Kalibriervorrichtung endet.

Die Anordnung einer Abführöffnung in Höhe des Kühlflüssigkeitsniveaus bietet weiterhin die Möglichkeit, daß übereinander mehrere und für sich verschließbare Abführöffnungen anzuordnen sind, die je nach Kühlflüssigkeitsbedarf und -höhe eingesetzt werden können.

Die bzw. wenigstens eine der Abführöffnungen für die Kühlflüssigkeit kann auch mit einer höhenverstellbaren Überfließkante, beispielsweise einem höhenverstellbaren Wehr, versehen sein.

Ausführungsbeispiele der Erfindung werden nachfolgend anhand der Zeichnung erläutert. Die Figuren der Zeichnung zeigen im einzelnen:

Figur 1     in schematischer Darstellung eine Kalibriervor- richtung für eine Kunststoffextrusionsanlage mit sogenannter Naßkühlung;

Figur 2     eine veränderte Darstellung der Vorrichtung gem. Figur 1 mit einigen Details;

Figur 3     eine zweite Ausführungsform, bei der die Abführ- öffnung in einem Becken endet.

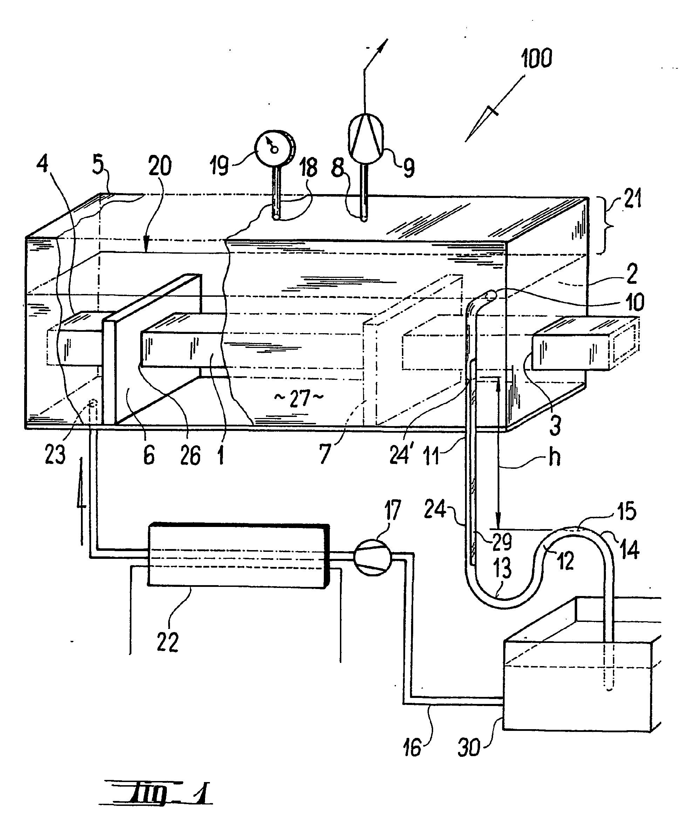

In der Figur 1 ist eine Kalibriervorrichtung 100 dargestellt, die zum sogenannten Naßkalibrieren eines endlos extrudierten, kontinuierlich geförderten Kunststoffhohlprofils 1 dient. Das extrudierte Kunststoffhohlprofil 1, welches nach dem Extrudieren gegebenenfalls durch eine Trockenkalibrierstrecke gefördert worden ist, wird zwischen einem Profileinlaß 3 und einem Profilauslaß 4 durch ein mit einer Kühlflüssigkeit 2 gefülltes Gehäuse 5 gefördert, durch Konvektionsströmung gekühlt und mittels bekannter Kalibrierführungen 6 und Kalibrieröffnungen 26 kalibriert.

Das Niveau 20 der Kühlflüssigkeit 2 liegt oberhalb des Scheitels des zu kalibrierenden Kunststoffprofils 1 und ist so eingestellt, daß ein flüssigkeitsfreier, luftgefüllter Bereich 21 oberhalb des Niveaus 20 der Kühlflüssigkeit 2 verbleibt. Über der freien Kühlflüssigkeitsoberfläche im Gehäuse 5 kann mittels einer Manometeröffnung 18 im Deckel des Gehäuses 5 mit einem Manometer 10 der Druck im Bereich 21 gemessen werden. Dieser Druck liegt unterhalb des äußeren Atmosphären-Druckes. Der Unterdruck wird aufrecht erhalten über eine Pumpenöffnung 8 mit angeschlossener Leitung und Luftpumpe 9. Der Unterdruck Pu hat eine Druckdifferenz $\Delta P$ = Pa - Pu gegenüber dem Unterdruck Pa. Der Druckunterschied $\Delta P$ kann in "der Wassersäule" gemessen werden, wobei 1 cm Wassersäule bzw. Kühlflüssigkeitssäule 1 mbar entspricht. Der Druck muß relativ genau eingehalten werden.

Die jeweiligen Druckunterschiede können anstelle mit Hilfe eines Manometers 10 auch mit einem Schauglas 29 beobachtet werden, das in die Abführleitung 11 eingebaut ist. Im Prinzip kann damit auch auf Manometer verzichtet werden.

Eine Abführöffnung 10 für die Kühlflüssigkeit 2 ist auf der Höhe des Niveaus 20 der Kühlflüssigkeit in einer Wand 27 des geschlossenen Gehäuses 5 angebracht. Die Kühlflüssigkeit 2 kann in die sich an die Abführöffnung 10 anschließende Abführleitung 11 ohne zusätzliche Pumpe ablaufen. Die Abführleitung 11 verläuft im wesentlichen vertikal und endet unterhalb eines Niveaus entsprechend $\Delta P$ in einem der Außenatmosphäre ausgesetzten Kühlflüssigkeitsvorrat 12 in der Rohrleitungskrümmung, wobei sich in der Abführleitung 11 eine kompakte Flüssigkeitssäule 24 mit dem Spiegel 24' ausbildet, deren Höhe h entsprechend dem Barometerprinzip der Druckdifferenz $\Delta P$ entspricht.

Im vorliegenden Ausführungsbeispiel endet die Abführleitung 11 in einem S-förmig gekrümmten Siphon 13, der zunächst von der tiefsten Stelle nach oben gekrümmt ist und in seinem Scheitelbogen 14 eine zur Atmosphäre hin offene Ventilationsöffnung 15 aufweist, aus der keine Flüssigkeit austritt.

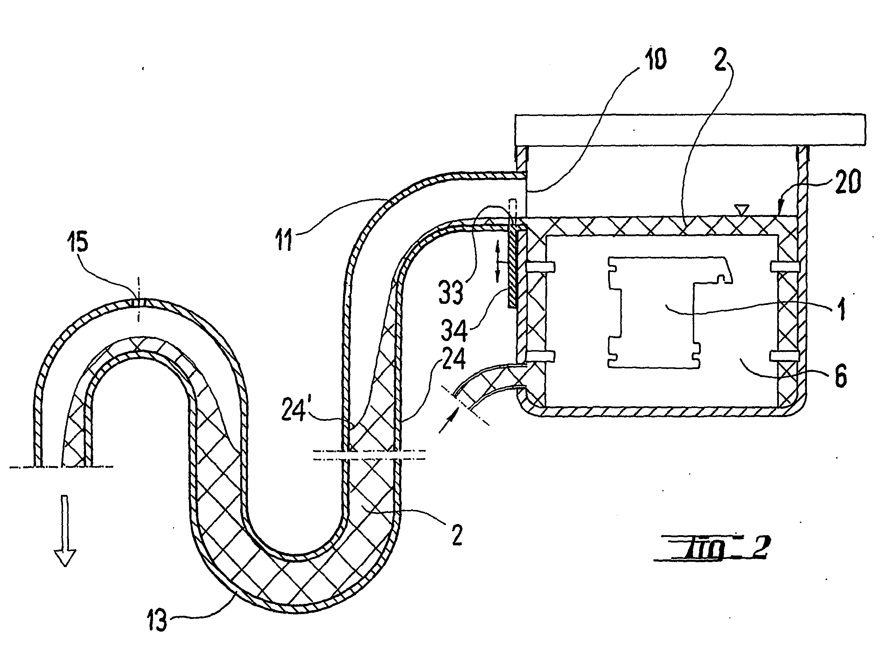

Figur 2 zeigt in etwas vergrößerter Darstellung, daß an der Abführöffnung 10 die Abführleitung 11 beginnt. Die kariert gezeichnete Kühlflüssigkeit 2 fließt hinein und bildet im Siphon 13 einen Verschluß gegenüber der Außenatmosphäre. Durch entsprechende Anordnung der Ventilationsöffnung 15 bildet sich die genannte Flüssigkeitssäule 24 aus. Die Flüssigkeit fließt am Ende des S-förmig gekrümmten Siphons 13 aus.

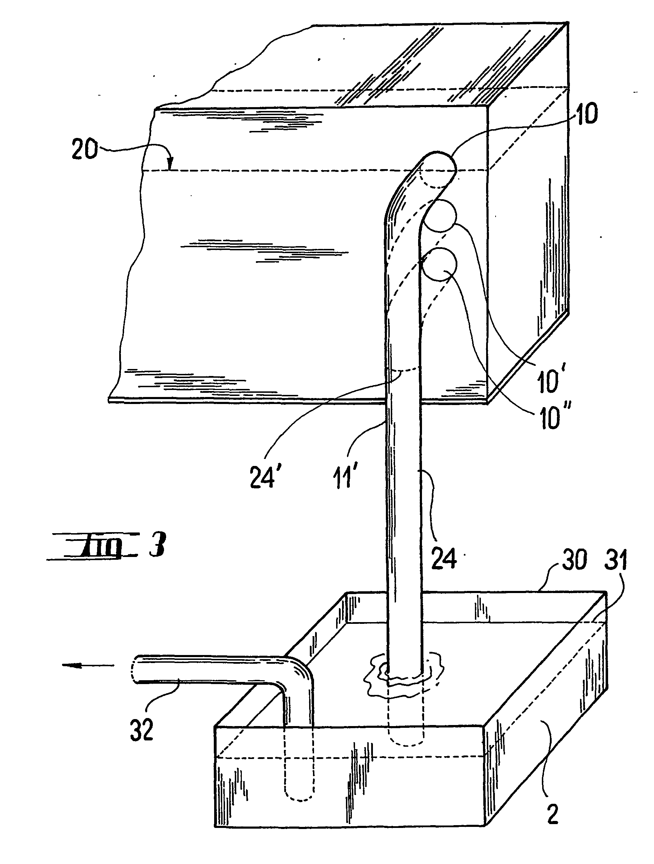

Die Wasserabführung der Kalibriervorrichtung kann auch so gestaltet werden, daß die Abführleitung 11', wie in Figur 3 dargestellt, nicht als Siphon endet, sondern in einem offenen Becken 30, das mit Kühlflüssigkeit 2 bis zu einer Höhe 31 gefüllt ist. Auch hier stellt sich der Barometer-Effekt ein. In der Abführleitung 11 ist eine Flüssigkeitssäule 24 mit einem Spiegel 24' vorhanden.

Die am Ausgang des Siphons bzw. über eine Entnahmeleitung 32 eines Beckens 30 entnehmbare Kühlflüssigkeit 2 wird über eine Rückführpumpe 17 und eine Leitung 16 umgewälzt. Die erwärmte Kühlflüssigkeit wird über einen externen Kühler 22 gekühlt und in der Nähe des Profilauslasses 4 über den Einlaß 23 wieder in das Gehäuse 5 eingedrückt.

Da es sich bei der zu fördernden Kühlflüssigkeit (Trinkwasser) um ein im wesentlichen einphasiges System handelt, ist die Pumpleistung wesentlich geringer als bei einer zweiphasigen Förderung, bei der größere, Anteile an Luft mitgeführt werden.

Wie zu erkennen ist, kann der Kühlflüssigkeitsauslaß, d. h. die Abführöffnung 10, sowohl an dieser Seite als auch an der Stirnseite des Gehäuses 5 angebracht sein. Die Kühlflüssigkeit wird im Ausführungsbeispiel im Gegenstrom zum Kunststoffhohlprofil 1 geführt; sie kann jedoch auch im Mitstrom geführt werden.

Weiterhin ist aus der Figur 3 zu erkennen, daß mehrere Abführöffnungen 10, 10', 10 " übereinander angeordnet sein können, wobei es sich um für sich verschließbare Abführöffnungen für die Kühlflüssigkeit handelt. Je nach dem erforderlichen Niveau der Kühlflüssigkeit lassen sich verschiedene Höhen einstellen.

Es ist aber auch möglich (vgl. Figur 2), eine Abführöffnung 10 für die Kühlflüssigkeit mit einer höhenverstellbaren Überfließkante 33 auszustatten, die mit Hilfe eines höhenverschiebbaren Wehrs 34 einstellbar ist.

Die vertikale Länge der Abführleitung ist auf einen Druckunterschied von $\Delta P$ von 10 bis 80 mbar eingestellt, so daß eine beherrschbare Kühlflüssigkeitssäule von 10 bis 80 cm entsteht, d. h. die Abführleitung ist mindestens 80 cm lang, wenn Extremwerte von 80 mbar = ∆P erwartet werden.

Insgesamt ergibt sich bei der neuen Kalibriervorrichtung mit pumpenloser Abführung des Kühlwassers ein bedeutender Vorteil insbesondere im laufenden Energieverbrauch gegenüber der üblichen mit Pumpen für Luft und Wasser versehenen Kalibriervorrichtungen.

**Patentansprüche**

1. Kalibriervorrichtung für eine Kunststoffextrusionsanlage, mit

 a. einem eine Kühlflüssigkeit (2) aufnehmenden Gehäuse (5), durch das ein Kunststoffprofil (1) gefördert und dabei von der Kühlflüssigkeit gekühlt wird,
 b. Kalibrierführungen (6), durch die das Kunststoffprofil (1) hindurchläuft,
 c. Zu- und Abführöffnungen (10, 23) mit angeschlossenen Leitungen für die Kühlflüssigkeit,
 d. wobei das Niveau (20) der Kühlflüssigkeit oberhalb des Scheitels des zu kalibrierenden Kunststoffprofils (1) liegt und so eingestellt ist, daß ein flüssigkeitsfreier luftgefüllter Bereich (21) oberhalb des Niveaus der Kühlflüssigkeit verbleibt,
 e. einer oberhalb des Niveaus (20) angeordneten Luftabsaugöffnung (8), durch die Luft absaugbar ist und ein Unterdruck $p_u$ im flüssigkeitsfreien, luftgefüllten Bereich oberhalb des Niveaus der Kühlflüssigkeit gegenüber dem Außenatmosphärendruck herstellbar ist,
 wobei ein Druckunterschied ∆p zwischen dem in der Kalibriervorrichtung herrschenden Unterdruck $P_u$ und dem außerhalb der Kalibriervorrichtung herrschende Atmosphärendruck $p_a$, jeweils gemessen in Längeneinheiten einer Kühlflüssigkeitsäule, vorliegt, und
 f. die Abführöffnung (10) für die Kühlflüssigkeit auf der Höhe des Niveaus (20) der Kühlflüssigkeit in einer Wand (27) des Gehäuses (5) der Kalibriervorrichtung angeordnet ist,

 **dadurch gekennzeichnet, daß** eine sich an die Abführöffnung (10) anschließende Abführleitung (11) im wesentlichen vertikal verläuft und unterhalb eines Niveaus entsprechend AP in einem der Außenatmosphäre ausgesetzten Kühlflüssigkeitsvorrat (2) endet, so daß die Kühlflüssigkeit ohne zusätzliche Pumpe ablaufen kann,
 wobei sich in der Abführleitung (11) eine kompakte Flüssigkeitssäule mit einer Höhe h entsprechend ∆P ausbildet und daß die Abführleitung in einem offenen Becken (20) oder einer offenen Rinne endet, wobei die Öffnung der Abführleitung unterhalb des Kühlflüssigkeitsspiegels (31) des Beckens oder der Rinne angeordnet ist und
wobei die vertikale Länge der Abführleitung mindestens 80 cm beträgt, entsprechend einem Druckunterschied ∆p von wenigstens 10 bis 80 mbar.

2. Kalibriervorrichtung nach Anspruch 1, **dadurch gekennzeichnet, daß** die Abführleitung in einem S-förmig gekrümmten Siphon (12) endet, der an seinem oberen Scheitelbogen (14) eine Ventilationsöffnung (15) aufweist.

3. Kalibriervorrichtung nach einem der vorhergehenden Ansprüche, **dadurch gekennzeichnet, daß** die Abführleitung mit einem über die Flüssigkeitssäule reichenden Schauglas (29) versehen ist.

4. Kalibriervorrichtung nach einem der vorhergehenden Ansprüche, **dadurch gekennzeichnet, daß** der der Außenatmosphäre ausgesetzte Kühlflüssigkeitsvorrat über einen geschlossenen Kreislauf über einen Wärmetauscher (Kühler 22) und eine Pumpstrecke geführt ist, die unterhalb des Niveaus der Kühlflüssigkeit an Kühlflüssigkeitseinlaß (23) im Gehäuse der Kalibriervorrichtung endet.

5. Kalibriervorrichtung nach einem der vorhergehenden Ansprüche, **dadurch gekennzeichnet, daß** mehrere übereinander angeordnete und für sich verschließbare Abführöffnungen (10, 10', 10") für die Kühlflüssigkeit in die Wand des Gehäuses eingebracht sind.

6. Kalibriervorrichtung nach einem der vorhergehenden Ansprüche, **dadurch gekennzeichnet, daß** die bzw. wenigstens eine der Abführöffnungen für die Kühlflüssigkeit mit einer höhenverstellbaren Überfließkante (32) versehen ist.

7. Kalibriervorrichtung nach Anspruch 7, **dadurch gekennzeichnet, daß** die bzw. wenigstens eine der Abführöffnungen mit einem höhenverstellbaren Wehr (34) versehen ist.

**Claims**

1. A calibration apparatus for a plastic extrusion plant, with

 a. a housing (5) which receives a cooling liquid (2) and through which a plastics material profile (1) is conveyed and is cooled by the cooling liquid during this,
 b. calibration guides (6) through which the plastics material profile (1) passes,
 c. supply and discharge openings (10, 23) with attached lines for the cooling liquid,
d. wherein the level (20) of the cooling liquid is above the apex of the plastics material profile (1) to be calibrated and is set in such a way that an air-filled region (21) free of liquid remains above the level of the cooling liquid,
e. an air suction opening (8) which is arranged above the level (20) and through which air is capable of being sucked away and an under-pressure $p_u$ with respect to the external atmospheric pressure is capable of being produced in the air-filled region free of liquid above the level of the cooling liquid,
wherein a pressure difference $\Delta p$ is present between the under-pressure $p_u$ prevailing in the calibration apparatus and the atmospheric pressure $p_a$ prevailing outside the calibration apparatus measured in units of length of a cooling liquid column in each case, and
f. the discharge opening (10) for the cooling liquid is arranged at the height of the level (20) of the cooling liquid in a wall (27) of the housing (5) of the calibration apparatus,

**characterized in that** a discharge line (11) attached to the discharge opening (10) extends substantially vertically and terminates below a level corresponding to $\Delta p$ in a cooling liquid reservoir (2) subjected to the external atmosphere, so that the cooling liquid can be discharged without an additional pump, wherein a compact liquid column with a height h corresponding to $\Delta p$ is formed in the discharge line (11), and the discharge line terminates in an open basin (20) or an open channel, wherein the opening of the discharge line is arranged below the cooling liquid surface (31) of the basin or the channel, and wherein the vertical length of the discharge line amounts to at least 80 cm, corresponding to a pressure difference $\Delta p$ of at least from 10 to 80 mbar.

2. A calibration apparatus according to claim 1, **characterized in that** the discharge line terminates in a siphon (12) which is curved into an S-shape and which has a ventilation opening (15) at its upper apex bend (14).

3. A calibration apparatus according to one of the preceding claims, **characterized in that** the discharge line is provided with an inspection glass (29) extending above the liquid column.

4. A calibration apparatus according to any one of the preceding claims, **characterized in that** the cooling liquid reservoir subjected to the external atmosphere is conveyed by way of a closed circuit by way of a heat exchanger (cooler 22) and a pumping path which terminates below the level of the cooling liquid at the cooling liquid inlet (23) in the housing of the calibration apparatus.

5. A calibration apparatus according to any one of the preceding claims, **characterized in that** a plurality of discharge openings (10, 10', 10") for the cooling liquid arranged one above the other and capable of being closed separately are formed in the wall of the housing.

6. A calibration apparatus according to any one of the preceding claims, **characterized in that** the discharge openings or at least one of the discharge openings for the cooling liquid are or is provided with a vertically adjustable overflow edge (32).

7. A calibration apparatus according to claim 7 [*sic*], **characterized in that** the discharge openings or at least one of the discharge openings are or is provided with a vertically adjustable barrage (34).

## Revendications

1. Dispositif de calibrage pour une installation d'extrusion de matière plastique, comprenant

    a. un boîtier (5) recevant un liquide de refroidissement (2), au travers duquel un profilé en matière plastique (1) est transporté et refroidi par le liquide de refroidissement,
    b. des guidages de calibrage (6) que traverse le profilé en matière plastique (1),
    c. des ouvertures d'amenée et d'évacuation (10, 23) dotées de conduites raccordées pour le liquide de refroidissement,
    d. le niveau (20) du liquide de refroidissement se trouvant au-dessus du sommet du profilé en matière plastique à calibrer (1) et étant réglé de sorte qu'une zone (21) remplie d'air sans liquide reste au-dessus du niveau de liquide de refroidissement,
    e. une ouverture d'aspiration d'air (8) disposée au-dessus du niveau (20), par laquelle de l'air peut être aspiré et une dépression $p_u$ peut être établie dans la zone remplie d'air, sans liquide au-dessus du niveau de liquide de refroidissement par rapport à la pression atmosphérique, une pression différentielle $\Delta p$ étant présente entre la dépression $p_u$ régnant dans le dispositif de calibrage et la pression atmosphérique $p_a$ régnant en dehors du dispositif de calibrage, respectivement mesurée en unité de longueur d'une colonne de liquide de refroidissement, et
    f. l'ouverture d'évacuation (10) pour le liquide de refroidissement étant disposée à la hauteur du niveau (20) de liquide de refroidissement dans une paroi (27) du boîtier (5) du dispositif de calibrage,

**caractérisé en ce qu'**une conduite d'évacuation (11) se raccordant à l'ouverture d'évacuation (10) s'étend sensiblement verticalement et se termine au-dessous d'un niveau selon ΔP dans un réservoir de liquide de refroidissement (2) soumis à l'atmosphère extérieure de sorte que le liquide de refroidissement puisse s'écouler sans pompe supplémentaire,
une colonne de liquide compacte avec une hauteur h selon ΔP étant réalisée dans la conduite d'évacuation (11) et **en ce que** la conduite d'évacuation se termine dans un bassin (20) ouvert ou une rigole ouverte, l'ouverture de la conduite d'évacuation étant disposée au-dessous du niveau de liquide de refroidissement (31) du bassin ou de la rigole et la longueur verticale de la conduite d'évacuation s'élevant au moins à 80 cm, selon une pression différentielle Δp d'au moins 10 à 80 mbars.

2. Dispositif de calibrage selon la revendication 1, **caractérisé en ce que** la conduite d'évacuation se termine en un siphon (12) courbé en S qui présente une ouverture de ventilation (15) sur sa courbe de sommet supérieure (14).

3. Dispositif de calibrage selon l'une quelconque des revendications précédentes, **caractérisé en ce que** la conduite d'évacuation est pourvue d'un verre de regard (29) atteignant la colonne de liquide.

4. Dispositif de calibrage selon l'une quelconque des revendications précédentes, **caractérisé en ce que** le réservoir de liquide de refroidissement soumis à l'atmosphère extérieure traverse, par un circuit fermé, un échangeur de chaleur (radiateur 22) et un parcours de pompage qui se termine au-dessous du niveau de liquide de refroidissement au niveau de l'entrée de liquide de refroidissement (23) dans le boîtier du dispositif de calibrage.

5. Dispositif de calibrage selon l'une quelconque des revendications précédentes, **caractérisé en ce que** plusieurs ouvertures d'évacuation (10, 10', 10") verrouillables en soi et disposées les unes au-dessus des autres sont réalisées dans la paroi du boîtier.

6. Dispositif de calibrage selon l'une quelconque des revendications précédentes, **caractérisé en ce que** les ou au moins l'une des ouvertures d'évacuation pour le liquide de refroidissement est pourvu d'une arête de débordement réglable en hauteur (32).

7. Dispositif de calibrage selon la revendication 7, **caractérisé en ce que** les ou au moins l'une des ouvertures d'évacuation est pourvue d'un déversoir (34) réglable en hauteur.

_Fig. 1_

15

11

33

34
24

24'

10    2

20

1

6

2

13

_Fig. 2_

EP 1 363 762 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19622419
- DE 19707712
- JP 61035928 B
- US 3558753 A